# EUROPÄISCHE PATENTSCHRIFT

(11) **EP 3 845 403 B1**
(45) Veröffentlichungstag und Bekanntmachung des Hinweises auf die Patenterteilung: **05.10.2022**
(21) Anmeldenummer: 20210553.2
(22) Anmeldetag: 30.11.2020
(51) Int. Cl.: B60H 1/22

(54) **WÄRMETAUSCHERGEHÄUSE**
HEAT EXCHANGER HOUSING
BOITIER D'ÉCHANGEUR DE CHALEUR

(30) Priorität: 03.01.2020 DE 102020100050
(43) Veröffentlichungstag der Anmeldung: 07.07.2021
(73) Patentinhaber: Eberspächer Climate Control Systems GmbH, 73730 Esslingen (DE)
(72) Erfinder: Humburg, Michael, 73035 Göppingen (DE); Jensen, Hans, 73265 Dettingen (DE)
(74) Vertreter: Ruttensperger Lachnit Trossin Gomoll

(56) Entgegenhaltungen:
- DE-A1- 19 502 082
- DE-A1- 19 740 062
- DE-A1-102009 046 781
- DE-A1-102012 220 792
- DE-C1- 10 064 721
- US-A- 3 703 895

## Beschreibung

Die vorliegende Erfindung betrifft ein Wärmetauschergehäuse für eine Wärmetauscheranordnung für ein brennstoffbetriebenes Fahrzeugheizgerät gemäß dem Oberbegriff des Anspruchs 1.

Aus der DE 10 2013 201 988 A1 ist ein Wärmetauschergehäuse bekannt, welches als äußeres Wärmetauschergehäuse einer Wärmetauscheranordnung eine mit einer Umfangswandung einer Gehäusewandung des Wärmetauschergehäuses einstückig ausgebildete Trägeranordnung umfasst. Die mit dem Wärmetauschergehäuse einstückig ausgebildete Trägeranordnung umfasst an einem nach außen vorstehenden Vorsprungsbereich eine nutartige Hinterschneidung und eine oder mehrere Gewindeöffnungen zur Aufnahme eines Schraubbolzens. Zur Festlegung an einer an einem Fahrzeug vorgesehenen Trägerstruktur, welche beispielsweise durch einen im Wesentlichen ebenen Abschnitt eines Karosserieteils einer Fahrzeugkarosserie bereitgestellt sein kann, wird ein aus Blechmaterial geformtes, plattenartiges Trägerelement eingesetzt, welches mit einem Eingriffsbereich in die an der Gehäusewandung vorgesehene nutartige Hinterschneidung eingreifend positioniert wird und durch welches hindurch ein Schraubbolzen in jede in der Gehäusewandung vorgesehene Gewindeöffnung eingreifend positioniert wird. An dem plattenartigen Trägerelement ist eine eine Mehrzahl von Befestigungselement-Durchgriffsöffnungen umfassende Befestigungsformation vorgesehen, durch welche hindurch beispielsweise als Schraubbolzen ausgebildete Befestigungselemente in die am Fahrzeug vorgesehenen Trägerstruktur eingeschraubt werden können.

Ein Wärmetauschergehäuse gemäß dem Oberbegriff des Anspruchs 1 ist aus der US 3 703 895 A bekannt. Dieses bekannte Wärmetauschergehäuse ist aus zwei Gehäuseteilen zusammengesetzt. Eines der beiden Gehäuseteile stellt einen Teil einer Umfangswandung und eine Bodenwandung bereit, während das andere der Gehäuseteile den verbleibenden Teil der Umfangswandung bereitstellt. Eine mit den beiden Gehäuseteilen einstückig ausgebildete Trägeranordnung umfasst an jedem der Gehäuseteile in einem der Bodenwandung nahe liegenden Bereich zwei bezüglich der Umfangswandung nach außen hervorstehende, plattenartig ausgebildete Trägerelemente. Eine Befestigungsformation zur Befestigung dieses Wärmetauschergehäuses an einer Trägerstruktur umfasst in jedem der plattenartig ausgebildeten Trägerelemente eine Befestigungselement-Durchgriffsöffnung, durch welche ein beispielsweise als Schraube ausgebildetes Befestigungselement hindurchgeführt werden kann.

Es ist die Aufgabe der vorliegenden Erfindung, ein Wärmetauschergehäuse für eine Wärmetauscheranordnung für ein brennstoffbetriebenes Fahrzeugheizgerät vorzusehen, welches eine stabile, vereinfachte Anbindung an ein Fahrzeug ermöglicht.

Erfindungsgemäß wird diese Aufgabe gelöst durch ein Wärmetauschergehäuse für eine Wärmetauscheranordnung für ein brennstoffbetriebenes Fahrzeugheizgerät gemäß Anspruch 1. Diese umfasst eine Gehäusewandung und eine mit der Gehäusewandung einstückig ausgebildete Trägeranordnung.

Die Trägeranordnung umfasst wenigstens ein mit der Gehäusewandung einstückig ausgebildetes Trägerelement zur Festlegung an einer Trägerstruktur eines Fahrzeugs, wobei an dem wenigstens einen Trägerelement eine Befestigungsformation zur Festlegung an der Trägerstruktur vorgesehen ist.

Bei dem erfindungsgemäß aufgebauten Wärmetauschergehäuse werden keine separaten Bauteile eingesetzt, über welche das Wärmetauschergehäuse an der Trägerstruktur in einem Fahrzeug getragen ist. Die gesamte Trägeranordnung ist als integraler Bestandteil des Wärmetauschergehäuses bereitgestellt und wird direkt oder gegebenenfalls unter Verwendung eines Adapters an der in einem Fahrzeug bereitgestellten, im Allgemeinen fahrzeugfesten Trägerstruktur festgelegt.

Es ist darauf hinzuweisen, dass mit dem Ausdruck "einstückig" bzw. "integral" im Sinne der vorliegenden Erfindung ein Aufbau angesprochen ist, bei welchem die in Frage stehenden, miteinander einstückig bzw. integral ausgebildeten Bereiche eines Bauteils, im vorliegenden Falle des Wärmetauschergehäuses, als ein Materialblock in einem Herstellungsvorgang bereitgestellt werden, so dass keine Verbindungsvorgänge erforderlich sind, um diese Bereiche miteinander zu verbinden, wie dies dann der Fall wäre, wenn diese Bereiche als separate Bauteile bereitgestellt wären, die zum Erhalt des Gesamtaufbaus miteinander verbunden werden müssten.

Um die einstückige Integration der Trägeranordnung in das Wärmetauschergehäuse in einfacher Weise realisieren zu können, umfasst die Gehäusewandung eine in Richtung einer Gehäuselängsachse sich erstreckende, die Gehäuselängsachse umgebende Umfangswandung, wobei die Trägeranordnung wenigstens ein an die Umfangswandung angebundenes Trägerelement umfassen kann, und umfasst die Gehäusewandung eine zu einer Gehäuselängsachse quer angeordnete Bodenwandung, wobei die Trägeranordnung wenigstens ein an die Bodenwandung angebundenes Trägerelement umfassen kann.

Für eine stabile Anbindung an die Trägerstruktur in einem Fahrzeug umfasst die Trägeranordnung wenigstens ein plattenartiges Trägerelement.

Dabei kann eine erhöhte Variabilität für den Einbau in ein Fahrzeug erreicht werden, wenn die Trägeranordnung eine Mehrzahl plattenartiger Trägerelemente umfasst.

Um im Bereich des Anschlusses eines Trägerelements an einen anderen Bereich der Gehäusewandung eine hohe Stabilität gewährleisten zu können, ist wenigstens ein plattenartiges Trägerelement vermittels einer Mehrzahl von jeweils einen Zwischenraum zwischen sich bildenden Verbindungsbereichen an die Umfangswandung angebunden. Ferner kann zum Erhalt einer definierten Einbauposition in ein Fahrzeug wenigstens ein plattenartiges Trägerelement im Wesentlichen parallel zur Gehäuselängsachse angeordnet sein.

Beispielsweise kann bei Ausgestaltung des Wärmetauschergehäuses mit einer Umfangswandung die Trägeranordnung zwei die Umfangswandung zwischen sich aufnehmende und zueinander im Wesentlichen parallel angeordnete plattenartige Trägerelemente umfassen.

Für eine weiter erhöhte Variabilität im Einbau kann bei Ausgestaltung der Gehäusewandung mit einer Bodenwandung wenigstens ein plattenartiges Trägerelement vermittels einer Mehrzahl von jeweils einen Zwischenraum zwischen sich bildenden Verbindungsbereichen an die Bodenwandung angebunden sein. Insbesondere kann dabei wenigstens ein plattenartiges Trägerelement im Wesentlichen orthogonal zur Gehäuselängsachse angeordnet sein.

Für eine erhöhte Stabilität des Wärmetauschergehäuses und eine erhöhte Stabilität im Bereich der Anbindung an die Trägerstruktur eines Fahrzeugs wird vorgeschlagen, dass wenigstens ein Trägerelement wenigstens zwei zueinander angewinkelte Trägerelementabschnitte aufweist. Weiter kann wenigstens ein Trägerelement eine Versteifungsrippenstruktur aufweisen. Die Festlegung an der Trägerstruktur in einem Fahrzeug kann in besonders einfacher Art und Weise dadurch realisiert werden, dass an wenigstens einem Trägerelement die Befestigungsformation wenigstens eine Befestigungselement-Durchgriffsöffnung für ein das Trägerelement z.B. an der Trägerstruktur festlegendes Befestigungselement umfasst.

Für eine weiter erhöhte Festigkeit kann wenigstens eine Befestigungselement-Durchgriffsöffnung die Versteifungsrippenstruktur durchsetzend angeordnet sein.

Ein weiterer vereinfachter Aufbau des Wärmetauschergehäuses kann dadurch erreicht werden, dass, beispielsweise an einem mit der Gehäusewandung einstückig ausgebildeten Wärmeträgermedium-Durchströmstutzen, ein mit der Gehäusewandung einstückig ausgebildetes Wärmeträgermedium-Pumpengehäuse vorgesehen ist.

Wenn das Wärmetauschergehäuse als Kunststoff-Gussteil ausgebildet ist, wird ein stabiler und kostengünstig zu realisierender Aufbau erhalten.

Die Erfindung betrifft ferner eine Wärmetauscheranordnung für ein brennstoffbetriebenes Fahrzeugheizgerät, umfassend ein erfindungsgemäß aufgebautes Wärmetauschergehäuse.

Für eine definierte Führung des zu erwärmenden Wärmeträgermediums kann das Wärmetauschergehäuse ein äußeres Wärmetauschergehäuse sein. Die Wärmetauscheranordnung umfasst dabei weiter ein mit dem Wärmetauschergehäuse einen Wärmeträgermedium-Strömungsraum begrenzendes inneres Wärmetauschergehäuse. Beide Wärmetauschergehäuse, also das die Trägeranordnung als integraler Bestandteil aufweisende äußere Wärmetauschergehäuse und das innere Wärmetauschergehäuse, können dabei mit topfartiger Struktur jeweils mit einer Umfangswandung und einer daran anschließenden Bodenwandung ausgebildet sein.

Die vorliegende Erfindung wird nachfolgend mit Bezug auf die beiliegenden Figuren detailliert beschrieben. Es zeigt:
- Fig. 1: in Explosionsdarstellung wesentliche Systembereiche eines brennstoffbetriebenen Fahrzeugheizgeräts;
- Fig. 2: ein Fahrzeugheizgerät im Zusammenbau,
- Fig. 3: ein äußeres Wärmetauschergehäuse des Fahrzeugheizgeräts der Fig. 1 und 2 in Seitenansicht;
- Fig. 4: eine Schnittansicht des äußeren Wärmetauschergehäuses der Fig. 3, geschnitten längs einer Linie IV-IV in Fig. 3;
- Fig. 5: eine Draufsicht auf das an einer Trägerstruktur eines Fahrzeugs festgelegte äußere Wärmetauschergehäuse in Blickrichtung V in Fig. 3;
- Fig. 6: eine Seitenansicht des äußeren Wärmetauschergehäuses der Fig. 3 in Blickrichtung VI in Fig. 5;
- Fig. 7: in ihren Darstellungen a) und b) jeweils eine Schnittansicht eines plattenartigen Trägerelements des äußeren Wärmetauschergehäuses, geschnitten längs einer Linie Vlla-Vlla bzw. Vllb-Vllb in Fig. 6;
- Fig. 8: eine der Fig. 5 entsprechende Draufsicht auf ein äußeres Wärmetauschergehäuse einer alternativen Ausgestaltungsart in Blickrichtung VIII in Fig. 10;
- Fig. 9: eine Schnittdarstellung des äußeren Wärmetauschergehäuses der Fig. 8, geschnitten längs einer Linie IX-IX in Fig. 10;
- Fig. 10: eine Schnittansicht des Wärmetauschergehäuses, geschnitten längs einer Linie X-X in Fig. 9
- Fig. 11: eine den Fig. 5 bzw. 8 entsprechende Draufsicht auf ein äußeres Wärmetauschergehäuse einer weiteren alternativen Ausgestaltungsart in Blickrichtung XI in Fig. 13;
- Fig. 12: eine Schnittansicht des Wärmetauschergehäuses der Fig. 11, geschnitten längs einer Linie XII in Fig. 13;
- Fig. 14: eine Seitenansicht des äußeren Wärmetauschergehäuses der Fig. 11 in Blickrichtung XIV in Fig. 13;
- Fig. 15: eine Seitenansicht eines äußeren Wärmetauschergehäuses einer weiteren alternativen Ausgestaltungsart in Blickrichtung XV in Fig. 16;
- Fig. 16: eine Schnittdarstellung des äußeren Wärmetauschergehäuses der Fig. 15, geschnitten längs einer Linie XVI-XVI in Fig. 15;
- Fig. 17: eine Draufsicht auf das äußere Wärmetauschergehäuse der Fig. 15 in Blickrichtung XVII in Fig. 16;
- Fig. 18: eine Seitenansicht eines äußeren Wärmetauschergehäuses einer weiteren alternativen Ausgestaltungsart in Blickrichtung XVIII in Fig. 20;
- Fig. 19: eine Draufsicht auf das äußere Wärmetauschergehäuse der Fig. 18 in Blickrichtung XIX in Fig. 18;
- Fig. 20: eine Frontansicht des äußeren Wärmetauschergehäuses der Fig. 18 in Blickrichtung XX in Fig. 18.

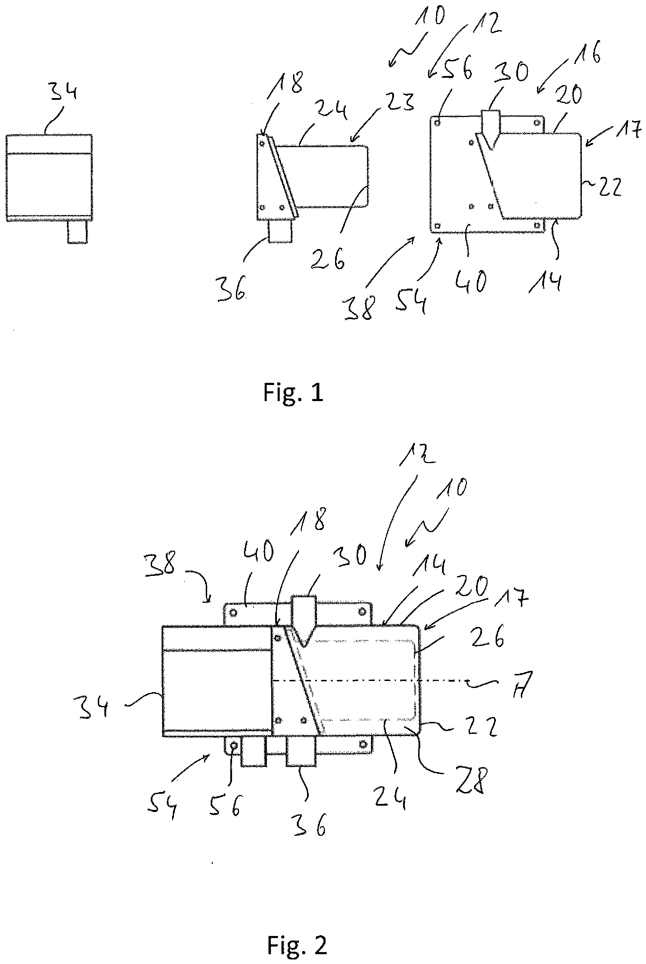

Die Fig. 1 und 2 zeigen die wesentlichen Systembereiche eines allgemein mit 10 bezeichneten brennstoffbetriebenen Fahrzeugheizgeräts. Das Fahrzeugheizgerät 10 umfasst eine Wärmetauscheranordnung 12 mit einem ein äußeres Wärmetauschergehäuse 14 bereitstellenden Wärmetauschergehäuse 16 und einem inneren Wärmetauschergehäuse 18. Das äußere Wärmetauschergehäuse 14 weist eine Gehäusewandung 17 mit einer in Richtung einer Gehäuselängsachse A langgestreckten und diese umgebenden Umfangswandung 20 sowie einer im axialen Endbereich an die Umfangswandung 20 anschließenden Bodenwandung 22 auf und ist somit mit im Wesentlichen topfartiger Struktur bereitgestellt. Das innere Wärmetauschergehäuse 18 weist eine Gehäusewandung 23 mit einer in Richtung der Gehäuselängsachse A langgestreckten und diese umgebenden Umfangswandung 24 und in einem axialen Endbereich an diese anschließend einer Bodenwandung 26 auf und stellt somit gleichermaßen eine im Wesentlichen topfartige Struktur bereit. Bei in die Gehäusewandung 17 des äußeren Wärmetauschergehäuses 14 eingesetzter Gehäusewandung 23 des inneren Wärmetauschergehäuses 18 begrenzen die beiden radial gestaffelt angeordneten Umfangswandungen 20, 24 und die beiden axial gestaffelt angeordneten Bodenwandungen 22, 26 in der Wärmetauscheranordnung 10 einen Wärmeträgermedium-Strömungsraum 28.

An der Umfangswandung 20 des das äußere Wärmetauschergehäuse 14 bereitstellenden Wärmetauschergehäuses 16 sind beispielsweise in dem von der Bodenwandung 22 entfernten axialen Endbereich zwei Wärmeträgermedium-Durchströmstutzen 30, 32 vorgesehen, über welche das zu erwärmende, flüssige Wärmeträgermedium in den Wärmeträgermedium-Strömungsraum 28 eingeleitet bzw. aus diesem abgeleitet werden kann.

Das brennstoffbetriebene Fahrzeugheizgerät 10 umfasst ferner eine Verbrennungsluftgebläse/Brenner-Baugruppe 34, welche einerseits ein Verbrennungsluftgebläse, beispielsweise Seitenkanalgebläse, aufweist, das die für die Verbrennung erforderliche Verbrennungsluft fördert, und andererseits einen Brennerbereich aufweist, in welchem die Verbrennungsluft mit Brennstoff gemischt und verbrannt wird. Die dabei entstehenden Verbrennungsabgase treten in einen im Inneren des inneren Wärmetauschergehäuses 18 gebildeten Verbrennungsabgas-Strömungsraum ein und verlassen diesen über einen Auslassstutzen 36 am inneren Wärmetauschergehäuse 18. Die das innere Wärmetauschergehäuse 18 durchströmenden heißen Verbrennungsabgase übertragen Wärme auf die Umfangswandung 24 und die Bodenwandung 16 des inneren Wärmetauschergehäuses 18, welche wiederum auf das im Wärmeträgermedium-Strömungsraum 28 das innere Wärmetauschergehäuse 18 umströmende Wärmeträgermedium übertragen wird.

Da das innere Wärmetauschergehäuse 18 mit den bis zu mehreren hundert °C heißen Verbrennungsabgasen direkt in Kontakt tritt, ist dieses aufgrund der thermischen Stabilität im Allgemeinen mit Metallmaterial, beispielsweise als Metall-Gussteil hergestellt. Das das äußere Wärmetauschergehäuse 14 bereitstellende Wärmetauschergehäuse 16 kommt nicht in direkten Kontakt mit den heißen Verbrennungsabgasen und ist somit im Verbrennungsbetrieb nur einer geringeren thermischen Belastung ausgesetzt. Das äußere Wärmetauschergehäuse 14 kann daher mit Kunststoffmaterial, beispielsweise als Kunststoff-Gussteil, aufgebaut werden, was einerseits zu erheblichen Kosteneinsparungen und andererseits zu einem deutlich leichteren Aufbau des Fahrzeugheizgeräts 10 führt.

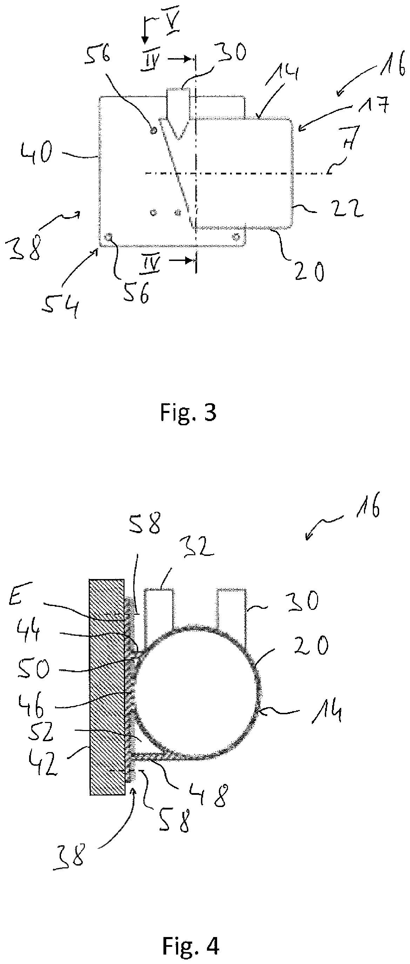

Die Fig. 3 bis 7 zeigen das bei dem Fahrzeugheizgerät 10 der Fig. 1 und 2 eingesetzte und das äußere Wärmetauschergehäuse 14 bereitstellende Wärmetauschergehäuse 16 detaillierter.

Bei dieser Ausgestaltungsart eines äußeren Wärmetauschergehäuses 14 ist an der Umfangswandung 20 als integraler Bestandteil des Wärmetauschergehäuses 16 bzw. äußeren Wärmetauschergehäuses 14 eine allgemein mit 38 bezeichnete Trägeranordnung vorgesehen. Die Trägeranordnung 38 umfasst ein plattenartig ausgebildetes Trägerelement 40, welches zur Gehäuselängsachse A im Wesentlichen parallel angeordnet ist. Dies bedeutet, dass eine durch das plattenartige Trägerelement 40 bereitgestellte Anbindungsebene E, welche an eine in einem Fahrzeug vorgesehene Trägerstruktur 42 angrenzend positioniert ist, zur Gehäuselängsachse A parallel orientiert ist bzw. eine zur Gehäuselängsachse A parallele Achse enthält.

Das plattenartige Trägerelement 40 ist im dargestellten Beispiel im Bereich von drei Verbindungsbereichen 44, 46, 48 an die beispielsweise mit kreisrunder Umfangskontur bereitgestellte Umfangswandung 20 angebunden, wobei zwischen jeweils zwei einander unmittelbar benachbarten Verbindungsbereichen 44, 46, 48 jeweils ein Zwischenraum 50, 52 gebildet ist. Die Verbindungsbereiche 44, 46, 48 sind in Richtung der Gehäuselängsachse A langgestreckt, wobei die Verbindungsbereiche 44, 48 im Wesentlichen stegartig ausgebildet sind und das plattenartige Trägerelement 40 mit der Umfangswandung 20 verbinden, während im Verbindungsbereich 46 das plattenartige Trägerelement 40 im Wesentlichen direkt an die Umfangswandung 20 anschließt.

Zur Anbindung an die in einem Fahrzeug vorgesehene Trägerstruktur 42, die beispielsweise durch ein Karosserieteil eines Fahrzeugs bereitgestellt sein kann, ist an dem plattenartigen Trägerelement 40 der Trägeranordnung 38 eine allgemein mit 54 bezeichnete Befestigungsformation mit einer Mehrzahl von Befestigungselement-Durchgriffsöffnungen 56 vorgesehen. Das Verteilungsmuster der Befestigungselement-Durchgriffsöffnungen 56 kann derart gewählt sein, dass eine Anbindung an eine Vielzahl verschieden gestalteter Trägerstrukturen 42 ermöglicht ist. Durch die Befestigungselement-Durchgriffsöffnungen 56 können in Fig. 4 angedeutete und beispielsweise als Schraubbolzen ausgebildete Befestigungselemente 58 hindurchgeführt und in entsprechende Innengewindeöffnungen der Trägerstruktur 42 angeschraubt werden, so dass das Wärmetauschergehäuse 16 bzw. das äußere Wärmetauschergehäuse 14 und über dieses das gesamte Fahrzeugheizgerät 10 an der Trägerstruktur 42 und somit an einem Fahrzeug festgelegt werden kann.

Es ist darauf hinzuweisen, dass zur Anpassung an verschieden gestaltete Trägerstrukturen beispielsweise Adapter eingesetzt werden können, welche an die Formgebung der fahrzeugfesten Trägerstrukturen einerseits und die Formgebung des plattenartigen Trägerelements 40 andererseits angepasst sein können und zwischen dem plattenartigen Trägerelement 40 und einer jeweiligen Trägerstruktur positioniert werden können. Auch kann zur Anpassung an verschieden gestaltete Trägerstrukturen das plattenartige Trägerelement 40 verschiedene Formgebungen aufweisen und, abweichend von der dargestellten im wesentlichen planaren Ausgestaltung, beispielsweise eine gekrümmte Form zur Anlage an einer entsprechend gekrümmten Trägerstruktur aufweisen.

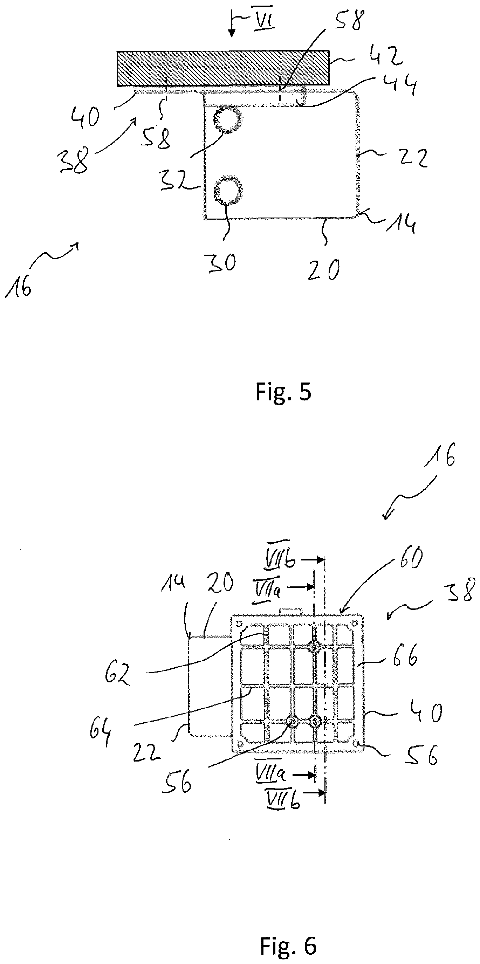

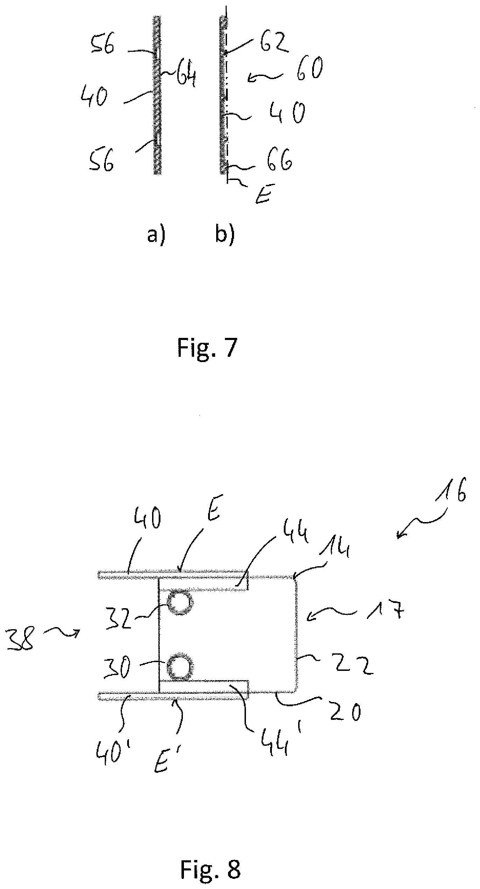

Das Wärmetauschergehäuse 16 bzw. innere Wärmetauschergehäuse 14 ist mit seiner Umfangswandung 20, Bodenwandung 22, also der Gehäusewandung 17, den beiden Wärmeträgermedium-Durchströmstutzen 30, 32 und der Trägeranordnung 38 mit dem plattenartigen Trägerelement 40 und den Verbindungsbereichen 44, 46, 48 einstückig ausgebildet. Dies bedeutet, dass das Wärmetauschergehäuse 16 mit all diesen Bestandteilen durch einen Materialblock bereitgestellt ist, der beispielsweise in einem Gussverfahren in einer entsprechenden Gießform durch Einleiten von zunächst flüssigem Aufbaumaterial gebildet wird. Ein nachträgliches Anbinden von irgendeinem dieser Bestandteile an das Wärmetauschergehäuse 16 ist somit nicht erforderlich. Vorteilhafterweise wird das Wärmetauschergehäuse 16 mit Kunststoffmaterial hergestellt, was zu einem geringen Gewicht führt und aufgrund des Umstandes, dass dieses Bauteil des Fahrzeugheizgeräts 10 nur einer vergleichsweise geringen thermischen Belastung unterliegt, nicht zu einer thermischen Schädigung führen kann. Um dabei insbesondere im Bereich der Trägeranordnung 38 bzw. des plattenartigen Trägerelements 40 eine hohe Stabilität zu erreichen, kann dieses beispielsweise an seiner der Trägerstruktur 42 zugewandt zu positionierenden Seite mit einer in den Fig. 6 und 7 erkennbaren Versteifungsrippenstruktur 60 beispielsweise mit zueinander näherungsweise orthogonal verlaufenden Versteifungsrippen 62 und 64 aufgebaut sein. Vorzugsweise sind die Befestigungselement-Durchgriffsöffnungen 56 dabei in Bereichen des plattenartigen Trägerelements 40 vorgesehen, in welchen auch die Versteifungsrippenstruktur 60 bzw. ein einen Teil der Versteifungsrippenstruktur 60 bereitstellender Randbereich 66 gebildet ist. Da das plattenartige Trägerelement 40 über drei in Abstand zueinander angeordnete Verbindungsbereiche 44, 46, 48 an die Umfangswandung 20 angebunden ist, wird auch hier bei Einsatz von Kunststoffmaterial für den Aufbau des das äußere Wärmetauschergehäuse 14 bereitstellenden Wärmetauschergehäuses 16 eine stabile Ausgestaltung erreicht.

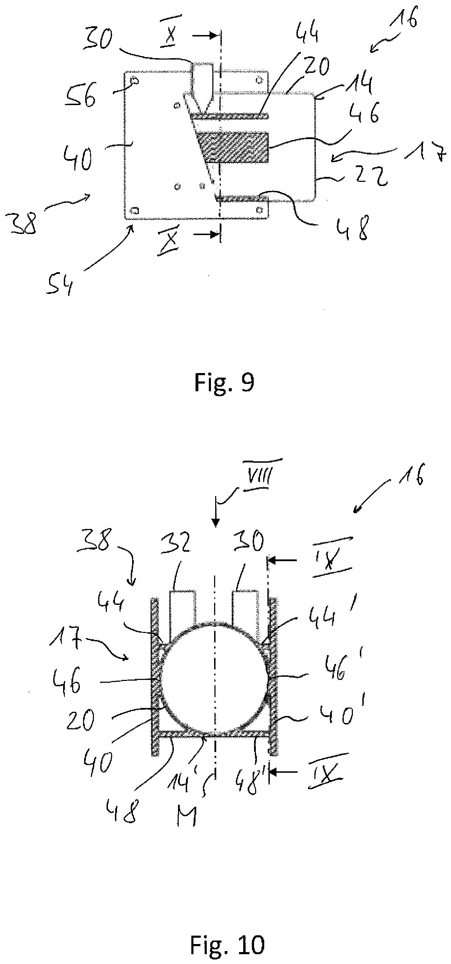

Eine alternative Ausgestaltungsform des das äußere Wärmetauschergehäuse 14 bereitstellenden Wärmetauschergehäuses 16 ist in den Fig. 8 bis 10 dargestellt. Bei dieser Ausgestaltungsform sind an der die äußere Gehäusewandung 14 bereitstellenden Gehäusewandung 16 zwei plattenartige Trägerelemente 40, 40' einander bezüglich der Gehäuselängsachse A diametral gegenüberliegend angeordnet. Die beiden plattenartigen Trägerelemente 40, 40' sind so positioniert, dass sie bzw. die durch diese aufgespannten Ebenen E, E', mit welchen die plattenartigen Befestigungselemente 40, 40' an eine Trägerstruktur angrenzend positioniert werden, zueinander und zur Gehäuselängsachse A im Wesentlichen parallel angeordnet sind. Die Fig. 10 zeigt, dass beispielsweise bezüglich einer die Gehäuselängsachse A enthaltenden Längsmittenebene M des äußeren Wärmetauschergehäuses 14 ein spiegelsymmetrischer Aufbau vorgesehen sein kann.

Jedes der beiden plattenartigen Trägerelemente 40, 40' ist über mehrere, insbesondere drei, Verbindungsbereiche 44, 46, 48 bzw. 44', 46', 48' an die Umfangswandung 20 angebunden.

Mit der in den Fig. 8 bis 10 dargestellten Struktur wird es möglich, ein das Wärmetauschergehäuse 16 als äußeres Wärmetauschergehäuse 14 aufweisendes Fahrzeugheizgerät in einer Mehrzahl verschiedener Einbaulagen an der Trägerstruktur in einem Fahrzeug festzulegen, so dass eine erhöhte Variabilität im Einbau in ein Fahrzeug bzw. im Einbau in verschiedene Fahrzeuge erreicht wird.

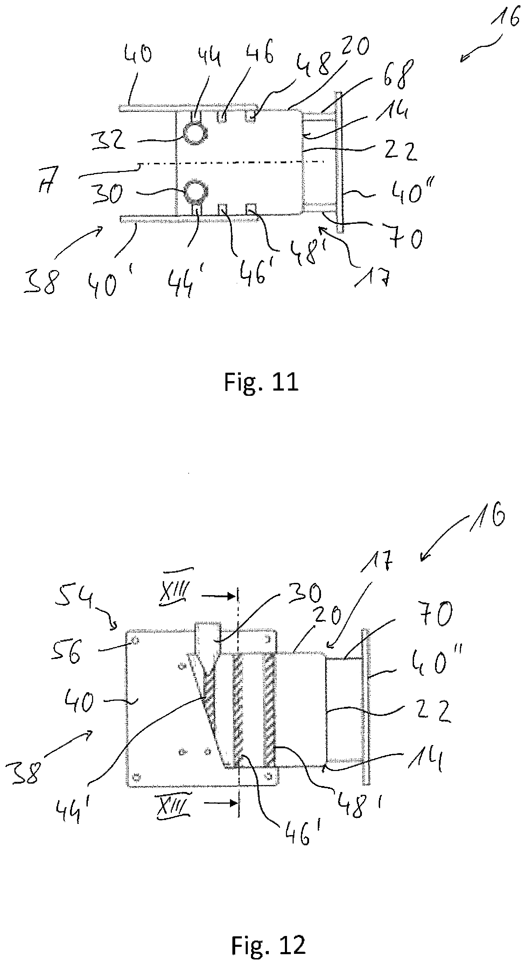

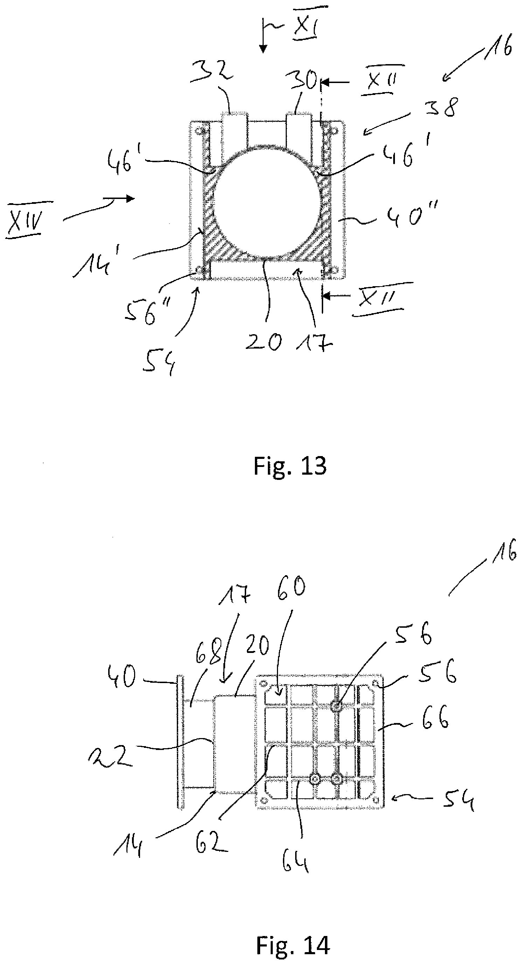

Eine weitere alternative Ausgestaltung ist in den Fig. 11 bis 14 dargestellt. Bei dieser Ausgestaltung weist das Wärmetauschergehäuse 16 insgesamt drei plattenartige Trägerelemente 40, 40', 40" auf. Die beiden bezüglich der Gehäuselängsachse A einander gegenüberliegend angeordneten plattenartigen Trägerelemente 40, 40' sind jeweils über drei Verbindungsbereiche 44, 46, 48 bzw. 44', 46', 48' an die Umfangswandung 20 angebunden, wobei bei dieser Ausgestaltungsform, anders als in den vorangehend beschriebenen Ausgestaltungsformen, die Verbindungsbereiche 44, 46, 48, 44', 46', 48' nicht in Richtung der Gehäuselängsachse A langgestreckt sind, sondern sich näherungsweise orthogonal bzw. windschief dazu erstrecken.

An die Bodenwandung 22 der Gehäusewandung 17 ist vermittels zweier Verbindungsbereiche 68, 70 ein drittes plattenartiges Trägerelement 40" angebunden. Das plattenartige Trägerelement 40" ist im Wesentlichen orthogonal zu der Gehäuselängsachse A angeordnet und kann, ebenso wie die plattenartigen Trägerelemente 40, 40', an seiner einer Tragestruktur zugewandt zu positionierenden Seite eine Versteifungsrippenstruktur aufweisen. Ferner weist auch das plattenartige Trägerelement 40" eine Mehrzahl von Befestigungselement-Durchgriffsöffnungen 56" der Befestigungsformation 54 auf. Ebenso wie bei der am plattenartigen Trägerelement 40 vorgesehenen Versteifungsrippenstruktur 60 bzw. der entsprechenden Versteifungsrippenstruktur am plattenartigen Trägerelement 40', können auch bei dem plattenartigen Trägerelement 40" die Befestigungselement-Durchgriffsöffnungen 56" in Kreuzungsbereichen von Versteifungsrippen bzw. in dem einen Teil der Versteifungsrippenstruktur bildenden Randbereich gebildet sein.

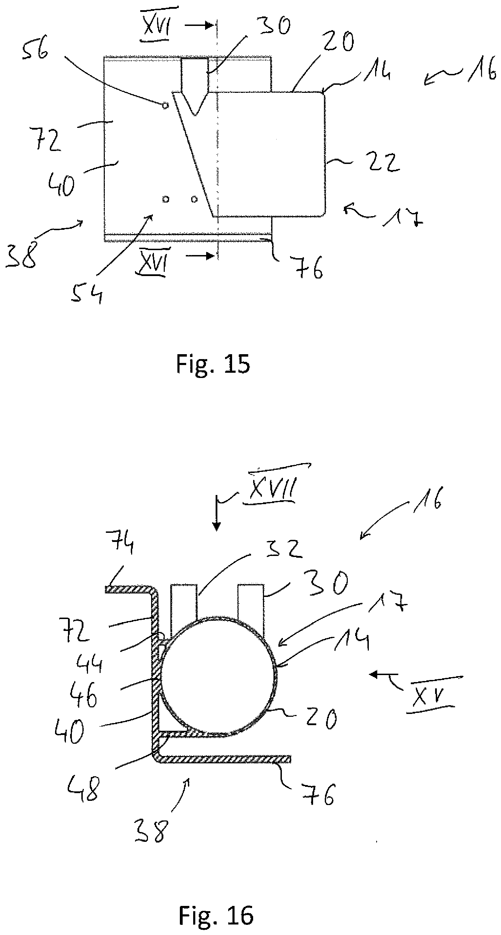

Eine weitere Abwandlung des das äußere Wärmetauschergehäuse 14 bereitstellenden Wärmetauschergehäuses 16 ist in den Fig. 15 bis 17 dargestellt. Diese Ausgestaltungsform entspricht näherungsweise der mit Bezug auf die Fig. 1 bis 7 detaillierter beschriebenen Ausgestaltungsform und weist ein an die Umfangswandung 20 z. B. mit drei Verbindungsbereichen 44, 46, 48 angebundenes plattenartiges Trägerelement 40 auf. Dieses ist mit näherungsweise S- bzw. Z-förmiger Struktur ausgebildet und weist drei zueinander jeweils angewinkelte Trägerelementabschnitte 72, 74, 76 auf. Dabei ist der Trägerelementabschnitt 72 durch die Verbindungsbereiche 44, 46, 48 an die Umfangswandung 20 angebunden und die Trägerelementabschnitte 74, 76 erstrecken sich beispielsweise näherungsweise orthogonal von dem Trägerelementabschnitt 72 in zueinander entgegengesetzten Richtungen. In jedem der Trägerelementabschnitte 72, 74, 76 können eine oder mehrere Befestigungselement-Durchgriffsöffnungen 56 der Befestigungsformation 54 vorgesehen sein, so dass eine weiter erhöhte Stabilität bzw. Variabilität in der Anbindung des so aufgebauten Wärmetauschergehäuses 16 an eine Trägerstruktur erreicht wird.

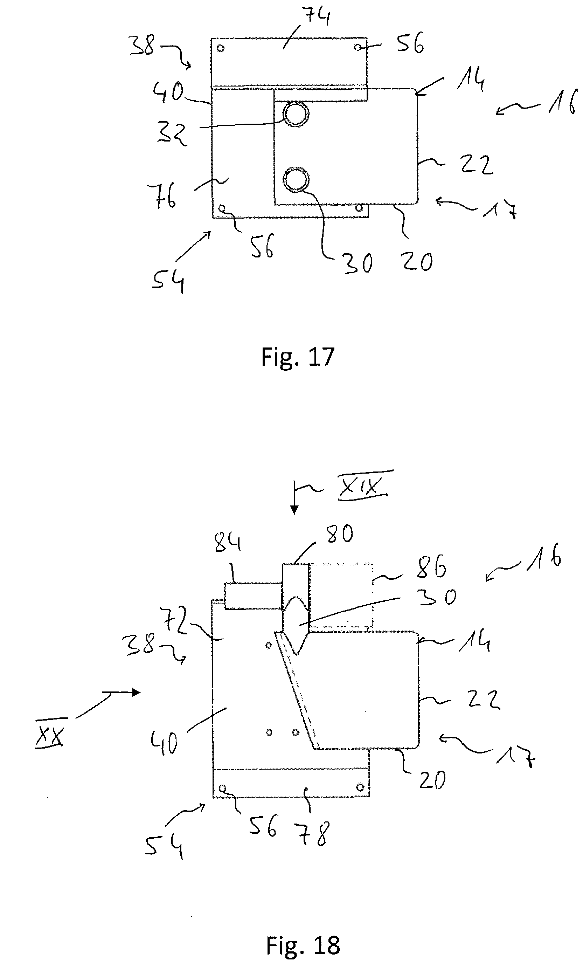

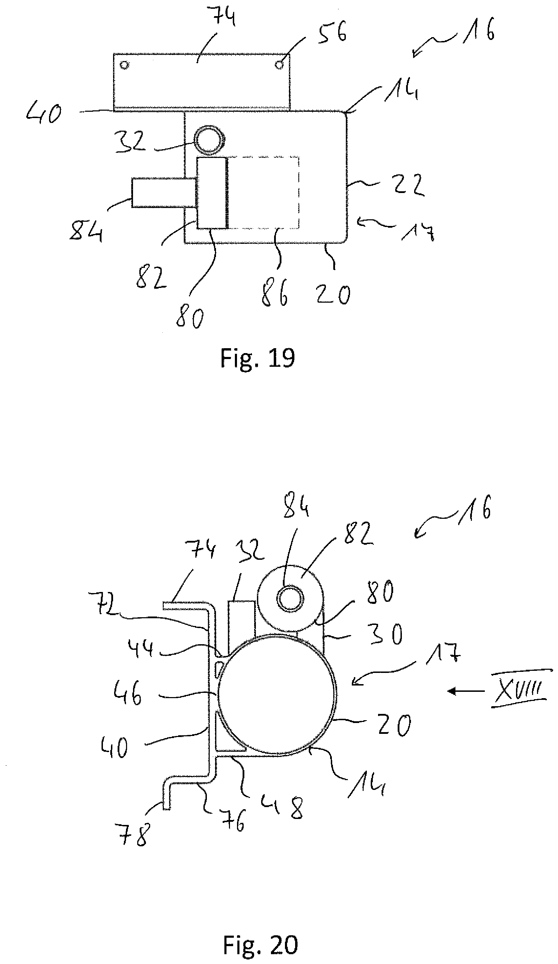

Eine weitere alternative Ausgestaltungsform des das äußere Wärmetauschergehäuse 14 bereitstellenden Wärmetauschergehäuses 16 ist in den Fig. 18 bis 20 dargestellt. Auch bei dieser Ausgestaltungsform ist das einzige vorgesehene plattenartige Trägerelement 40 mit mehreren Trägerelementabschnitten 72, 74. 76 aufgebaut, wobei bei dieser Ausgestaltungsform die beiden an den Trägerelementabschnitt 72 anschließenden Trägerelementabschnitte 74, 76 sich in gleicher Richtung und beispielsweise näherungsweise orthogonal zum Trägerelementabschnitt 72 erstrecken. Vom Trägerelementabschnitt 76 kann sich ein weiterer Trägerelementabschnitt 78 näherungsweise orthogonal erstrecken.

Bei der in den Fig. 18 bis 20 dargestellten Ausgestaltungsform ist am Wärmeträgermedium-Durchströmstutzen 30 ein allgemein mit 80 bezeichnetes Wärmeträgermedium-Pumpengehäuse vorgesehen. Der Wärmeträgermedium-Durchströmstutzen 30 ist zu dem Wärmeträgermedium-Pumpengehäuse 80 offen. An einen Bodenbereich 82 des Wärmeträgermedium-Pumpengehäuses 80 schließt ein Verbindungsstutzen 84 an, an welchen, ebenso wie an den Wärmeträgermedium-Durchströmstutzen 32 eine die Einbindung in einen Wärmeträgermediumkreislauf realisierende Leitung angeschlossen werden kann.

An das Wärmeträgermedium-Pumpengehäuse 80 kann eine in Fig. 9 schematisch dargestellte Wärmeträgermediumpumpe 86 angebunden werden, vermittels welcher das durch den Wärmeträgermedium-Strömungsraum 28 hindurch zu fördernde Wärmeträgermedium gefördert werden kann. Dabei kann abhängig davon, ob das Wärmeträgermedium durch den Wärmeträgermedium-Strömungsraum gedrückt oder gesaugt werden soll, der Wärmeträgermedium-Durchströmstutzen 30 entweder den Auslass aus dem Wärmeträgermedium-Strömungsraum oder den Einlass in den Wärmeträgermedium-Strömungsraum bereitstellen.

Auch bei dem in den Fig. 18 bis 20 dargestellten Aufbau kann das das äußere Wärmetauschergehäuse 14 bereitstellende Wärmetauschergehäuse 16 mit all seinen Bestandteilen, also der Umfangswandung 20, der Bodenwandung 22, den beiden Wärmeträgermedium-Durchströmstutzen 30, 32, dem plattenartigen Trägerelement 40 und den Verbindungsbereichen 44, 46, 48 sowie auch dem Wärmeträgermedium-Pumpengehäuse 80 und dem Verbindungsstutzen 84 einstückig beispielsweise als ein Kunststoffmaterialbauteil bereitgestellt werden, über welches vermittels der daran vorgesehenen Trägeranordnung 38 ein dieses Wärmetauschergehäuse 16 aufweisendes brennstoffbetriebenes Fahrzeugheizgerät ohne der Notwendigkeit, weitere separate Trägerelemente vorsehen zu müssen, an einer Trägerstruktur eines Fahrzeugs festgelegt werden kann.

Es ist abschließend darauf hinzuweisen, dass bei dem erfindungsgemäßen Aufbau eines Wärmetauschergehäuses verschiedenste Variationen vorgenommen werden können. So kann beispielsweise die Orientierung eines oder mehrerer plattenartiger Trägerelemente beispielsweise bezüglich der Gehäuselängsachse anders gewählt sein, wenn dies abhängig von der Tragestruktur in einem Fahrzeug vorteilhaft oder erforderlich ist. Auch müssen dann, wenn zwei derartige plattenartige Trägerelemente vorgesehen sind, diese nicht notwendigerweise parallel zueinander orientiert sein. Obgleich in den Figuren die plattenartigen Trägerelemente jeweils als ein vergleichsweise großer durchgehender Plattenabschnitt dargestellt sind, können diese auch mit mehreren beispielsweise voneinander getrennt oder miteinander in Abstand angeordneten Abschnitten ausgebildet sein.

Während die Ausgestaltung des Wärmetauschergehäuses mit der daran einstückig ausgebildeten Trägeranordnung aus Kunststoffmaterial besonders vorteilhaft ist, ist es selbstverständlich möglich, dass beispielsweise dann, wenn dies aus Gründen der Tragestabilität erforderlich ist, das Wärmetauschergehäuse mit allen daran vorgesehenen Bestandteilen aus Metallmaterial, beispielsweise mit Aluminiummaterial, aufgebaut wird. Abhängig von der geforderten Stabilität können auch mehr oder weniger als die in den vorangehend beschriebenen Ausgestaltungsformen verwendeten drei Verbindungsbereiche zur Anbindung eines jeweiligen Trägerelements an die Gehäusewandung eingesetzt werden.

## Patentansprüche

1. Wärmetauschergehäuse für eine Wärmetauscheranordnung für ein brennstoffbetriebenes Fahrzeugheizgerät, umfassend eine Gehäusewandung(17) mit einer in Richtung einer Gehäuselängsachse (A) sich erstreckenden, eine Gehäuselängsachse (A) umgebenden Umfangswandung (20) und einer zu der Gehäuselängsachse (A) quer angeordneten Bodenwandung (22), ferner umfassend eine mit der Gehäusewandung (17) einstückig ausgebildete Trägeranordnung (38), wobei die Trägeranordnung (38) wenigstens ein mit der Gehäusewandung (17) einstückig ausgebildetes, plattenartiges Trägerelement (48) zur Festlegung an einer Trägerstruktur (42) eines Fahrzeugs umfasst, wobei an dem wenigstens einen Trägerelement (40) eine Befestigungsformation (54) zur Festlegung an der Trägerstruktur (42) vorgesehen ist,
**dadurch gekennzeichnet, dass** wenigstens ein plattenartiges Trägerelement (40) vermittels einer Mehrzahl von jeweils einen Zwischenraum (50, 52) zwischen sich bildenden Verbindungsbereichen (44, 46, 48) an die Umfangswandung (20) angebunden ist oder/und wenigstens ein plattenartiges Trägerelement (40") vermittels einer Mehrzahl von jeweils einen Zwischenraum zwischen sich bildenden Verbindungsbereichen (68, 70) an die Bodenwandung (22) angebunden ist, und dass an jedem Trägerelement (40) die Befestigungsformation (54) eine Mehrzahl von Befestigungselement-Durchgriffsöffnungen (56) für das Trägerelement (40) festlegende Befestigungselemente (58) umfasst.

2. Wärmetauschergehäuse nach Anspruch 1, **dadurch gekennzeichnet, dass** die Trägeranordnung (38) eine Mehrzahl plattenartiger Trägerelemente (40, 40', 40") umfasst.

3. Wärmetauschergehäuse nach Anspruch 1 oder 2, **dadurch gekennzeichnet, dass** wenigstens ein an die Umfangswandung (20) angebundenes plattenartiges Trägerelement (40) im Wesentlichen parallel zur Gehäuselängsachse (A) angeordnet ist.

4. Wärmetauschergehäuse nach Anspruch 2 und Anspruch 3, **dadurch gekennzeichnet, dass** die Trägeranordnung (38) zwei die Umfangswandung (20) zwischen sich aufnehmende und zueinander im Wesentlichen parallel angeordnete plattenartige Trägerelemente (40, 40') umfasst.

5. Wärmetauschergehäuse nach einem der Ansprüche 1-4, **dadurch gekennzeichnet, dass** wenigstens ein an die Bodenwandung (22) angebundenes plattenartiges Trägerelement (40") im Wesentlichen orthogonal zur Gehäuselängsachse (A) angeordnet ist.

6. Wärmetauschergehäuse nach einem der vorangehenden Ansprüche, **dadurch gekennzeichnet, dass** wenigstens ein Trägerelement (40) wenigstens zwei zueinander angewinkelte Trägerelementabschnitte (72, 74, 76, 78) aufweist, oder/und dass wenigstens ein Trägerelement (40) eine Versteifungsrippenstruktur (60) aufweist.

7. Wärmetauschergehäuse nach Anspruch 6, **dadurch gekennzeichnet, dass** wenigstens eine Befestigungselement-Durchgriffsöffnung (56) die Versteifungsrippenstruktur (60) durchsetzend angeordnet ist.

8. Wärmetauschergehäuse nach einem der vorangehenden Ansprüche, **dadurch gekennzeichnet, dass**, vorzugsweise an einem mit der Gehäusewandung (17) einstückig ausgebildeten Wärmeträgermedium-Durchströmstutzen (30), ein mit der Gehäusewandung einstückig ausgebildetes Wärmeträgermedium-Pumpengehäuse (60) vorgesehen ist.

9. Wärmetauschergehäuse nach einem der vorangehenden Ansprüche, **dadurch gekennzeichnet, dass** das Wärmetauschergehäuse (16) als Kunststoff-Gussteil ausgebildet ist.

10. Wärmetauscheranordnung für ein brennstoffbetriebenes Fahrzeugheizgerät, umfassend ein Wärmetauschergehäuse (16) nach einem der vorangehenden Ansprüche.

11. Wärmetauscheranordnung nach Anspruch 10, **dadurch gekennzeichnet, dass** das Wärmetauschergehäuse (16) ein äußeres Wärmetauschergehäuse (14) ist, und dass ein mit dem Wärmetauschergehäuse (16) einen Wärmeträgermedium-Strömungsraum (28) begrenzendes inneres Wärmetauschergehäuse (18) vorgesehen ist.

## Claims

1. Heat exchanger housing for a heat exchanger arrangement for a fuel-operated vehicle heater, comprising a housing wall (17) with a circumferential wall (20) extending in the direction of a housing longitudinal axis (A) and surrounding a housing longitudinal axis (A) and a bottom wall (22) arranged transversely to the housing longitudinal axis (A), further comprising a support arrangement (38) formed integrally with the housing wall (17), wherein the support arrangement (38) comprises at least one plate-like support element (48) formed integrally with the housing wall (17) for fastening to a support structure (42) of a vehicle, wherein a fastening formation (54) is provided on the at least one support element (40) for fastening to the support structure (42),
**characterised in that** at least one plate-like support element (40) is connected to the circumferential wall (20) by means of a plurality of connecting regions (44, 46, 48) forming an intermediate space (50, 52) between each other or/and that at least one plate-like support element (40") is connected to the bottom wall (22) by means of a plurality of connecting regions (68, 70) forming an intermediate space between each other, and **in that** on each support element (40) the fastening formation (54) comprises a plurality of fastening element through-openings (56) for fastening elements (58) fastening the support element (40).

2. Heat exchanger housing according to claim 1, **characterized in that** the support arrangement (38) comprises a plurality of plate-like support elements (40, 40', 40").

3. Heat exchanger housing according to claim 1 or 2, **characterised in that** at least one plate-like support element (40) connected to the circumferential wall (20) is arranged substantially parallel to the housing longitudinal axis (A).

4. Heat exchanger housing according to claim 2 and claim 3, **characterised in that** the support arrangement (38) comprises two plate-like support elements (40, 40') receiving the circumferential wall (20) between them and arranged substantially parallel to one another.

5. Heat exchanger housing according to any one of claims 1-4, **characterized in that** at least one plate-like support element (40") connected to the bottom wall (22) is arranged substantially orthogonally to the housing longitudinal axis (A).

6. Heat exchanger housing according to one of the preceding claims, **characterized in that** at least one support element (40) has at least two support element sections (72, 74, 76, 78) which are angled with respect to one another, and/or **in that** at least one support element (40) has a stiffening rib structure (60).

7. Heat exchanger housing according to claim 6, **characterised in that** at least one fastening element through-opening (56) is arranged to pass through the stiffening rib structure (60).

8. Heat exchanger housing according to one of the preceding claims, **characterised in that** a heat transfer medium pump housing (60) formed integrally with the housing wall is provided, preferably on a heat transfer medium flow nozzle (30) formed integrally with the housing wall (17).

9. Heat exchanger housing according to one of the preceding claims, **characterised in that** the heat exchanger housing (16) is formed as a plastic casting part.

10. Heat exchanger arrangement for a fuel operated vehicle heater comprising a heat exchanger housing (16) according to any one of the preceding claims.

11. Heat exchanger arrangement according to claim 10, **characterised in that** the heat exchanger housing (16) is an outer heat exchanger housing (14), and **in that** an inner heat exchanger housing (18) defining a heat transfer medium flow space (28) with the heat exchanger housing (16) is provided.

## Revendications

1. Boîtier d'échangeur de chaleur pour un dispositif d'échangeur de chaleur pour un appareil de chauffage de véhicule fonctionnant au carburant, comprenant une paroi de boîtier (17) avec une paroi circonférentielle (20) s'étendant dans la direction d'un axe longitudinal de boîtier (A) et entourant un axe longitudinal de boîtier (A) et une paroi de fond (22) disposée transversalement à l'axe longitudinal de boîtier (A), comprenant en outre un agencement de support (38) réalisé d'une seule pièce avec la paroi de boîtier (17), dans lequel l'agencement de support (38) comprend au moins un élément de support (48) en forme de plaque, réalisé d'une seule pièce avec la paroi de boîtier (17), pour la fixation sur une structure de support (42) d'un véhicule, dans lequel une formation de fixation (54) est prévue sur ledit au moins un élément de support (40) pour la fixation sur la structure de support (42), **caractérisé en ce qu'**au moins un élément de support en forme de plaque (40) est relié à la paroi circonférentielle (20) au moyen d'une pluralité de zones de liaison (44, 46, 48) formant chacune un espace intermédiaire (50, 52) entre elles ou/et **en ce qu'**au moins un élément de support (40") en forme de plaque est relié à la paroi de fond (22) au moyen d'une pluralité de zones de liaison (68, 48) formant chacune un espace intermédiaire entre elles, et **en ce que** sur chaque élément de support (40), la formation de fixation (54) comprend une pluralité d'ouvertures de passage d'éléments de fixation (56) pour des éléments de fixation (58) fixant l'élément de support (40).

2. Boîtier d'échangeur de chaleur selon la revendication 1, **caractérisé en ce que** l'agencement de support (38) comprend une pluralité d'éléments de support (40, 40', 40") en forme de plaque.

3. Boîtier d'échangeur de chaleur selon la revendication 1 ou 2, **caractérisé en ce qu'**au moins un élément de support (40) en forme de plaque, relié à la paroi circonférentielle (20), est disposé essentiellement parallèlement à l'axe longitudinal de boîtier (A).

4. Boîtier d'échangeur de chaleur selon la revendication 2 et la revendication 3, **caractérisé en ce que** l'agencement de support (38) comprend deux éléments de support (40, 40') en forme de plaque recevant entre eux la paroi circonférentielle (20) et disposés sensiblement parallèlement entre eux.

5. Boîtier d'échangeur de chaleur selon l'une quelconque des revendications 1 à 4, **caractérisé en ce qu'**au moins un élément de support (40") en forme de plaque, relié à la paroi de fond (22), est disposé sensiblement orthogonalement à l'axe longitudinal de boîtier (A).

6. Boîtier d'échangeur de chaleur selon l'une des revendications précédentes, **caractérisé en ce qu'**au moins un élément de support (40) présente au moins deux sections d'élément de support (72, 74, 76, 78) inclinées l'une par rapport à l'autre, ou/et **en ce qu'**au moins un élément de support (40) présente une structure de nervures de renforcement (60).

7. Boîtier d'échangeur de chaleur selon la revendication 6, **caractérisé en ce qu'**au moins une ouverture de passage d'élément de fixation (56) est disposée en traversant la structure de nervures de renforcement (60).

8. Boîtier d'échangeur de chaleur selon l'une des revendications précédentes, **caractérisé en ce que**, de préférence sur une tubulure de passage de fluide caloporteur (30) formée d'une seule pièce avec la paroi de boîtier (17), il est prévu un boîtier de pompe de fluide caloporteur (60) formé d'une seule pièce avec la paroi de boîtier.

9. Boîtier d'échangeur de chaleur selon l'une des revendications précédentes, **caractérisé en ce que** le boîtier d'échangeur de chaleur (16) est réalisé sous forme de pièce moulée en matière plastique.

10. Agencement d'échangeur de chaleur pour un appareil de chauffage de véhicule fonctionnant au carburant, comprenant un boîtier d'échangeur de chaleur (16) selon l'une des revendications précédentes.

11. Agencement d'échangeur de chaleur selon la revendication 10, **caractérisé en ce que** le boîtier d'échangeur de chaleur (16) est un boîtier d'échangeur de chaleur extérieur (14), et **en ce qu'**il est prévu un boîtier d'échangeur de chaleur intérieur (18) délimitant avec le boîtier d'échangeur de chaleur (16) un espace d'écoulement de fluide caloporteur (28).
